# EUROPÄISCHE PATENTSCHRIFT

(11) **EP 3 393 859 B1**
(45) Veröffentlichungstag und Bekanntmachung des Hinweises auf die Patenterteilung: **17.11.2021**
(21) Anmeldenummer: 16816602.3
(22) Anmeldetag: 07.12.2016
(51) Int. Cl.: B60R 16/023, B60W 50/02

(54) **VERFAHREN ZUR MODIFIKATION SAFETY- UND/ODER SECURITY-RELEVANTER STEUERGERÄTE IN EINEM KRAFTFAHRZEUG, UND EINE DIESBEZÜGLICHE VORRICHTUNG**
METHOD FOR MODIFYING SAFETY- AND/OR SECURITY-RELEVANT CONTROL DEVICES IN A MOTOR VEHICLE, AND A CORRESPONDING APPARATUS
PROCÉDÉ DE MODIFICATION D'APPAREILS DE COMMANDE DE SÛRETÉ ET/OU DE SÉCURITÉ DANS UN VÉHICULE AUTOMOBILE, ET DISPOSITIF ASSOCIÉ

(30) Priorität: 21.12.2015 DE 102015226236
(43) Veröffentlichungstag der Anmeldung: 31.10.2018
(73) Patentinhaber: Bayerische Motoren Werke Aktiengesellschaft, 80809 München (DE)
(72) Erfinder: NEFF, Albrecht, 85716 Unterschleißheim (DE); PITZ, Michael, 80992 München (DE)
(86) Internationale Anmeldenummer: PCT/EP2016/080096
(87) Internationale Veröffentlichungsnummer: WO 2017/108407

(56) Entgegenhaltungen:
- EP-A2- 1 227 007
- WO-A1-98/26958
- WO-A1-2014/105825
- DE-A1-102012 200 184

## Beschreibung

Die vorliegende Erfindung betrifft ein Verfahren zur Überwachung und Modifikation von Kraftfahrzeugfunktionen in einem Kraftfahrzeug, eine diesbezügliche Vorrichtung und ein diesbezügliches Kraftfahrzeug.

Werden aktuell Fehlfunktionen in Steuergeräten festgestellt, so werden diese Fehler entweder durch ein Softwareupdate in der Werkstatt behoben oder falls dies nicht möglich ist, durch einen Austausch des Steuergerätes in der Werkstatt. In beiden Fällen jedoch, muss das Fahrzeug in eine Werkstatt gebracht werden.

Ferner ist es aktuell lediglich durch ein in der Werkstatt vorzunehmendes Softwareupdate möglich, Steuergeräte beziehungsweise Fahrzeugfunktionen an neue beziehungsweise veränderte Gegebenheiten anzupassen.

Auch kommt es in letzter Zeit häufiger vor, dass Fahrzeugfunktionen beziehungsweise Fahrzeugfunktionalitäten und Steuergeräte kompromittiert werden. Solche auftretenden Sicherheitslücken können aktuell auch erst durch ein aufwändiges Softwareupdate in einer Werkstatt behoben werden.

Daher wäre es wünschenswert eine Möglichkeit bereitzustellen, welche schnell und ohne Notwendigkeit eines Werkstattbesuches solche Fehlfunktionen und Störungen beziehungsweise solch kritische Ereignisse behebt.

Aus der WO 2014/195180 A1 ist ein Verfahren zur Steuerung eines Fahrwerkregelsystems eines Kraftfahrzeuges bekannt, das mit einer Fahrwerkregeleinheit und zumindest einer Fahrwerkkomponente versehen ist. Um eine verbesserte Lösung für die Erzielung eines gewünschten Fahrgefühls und/oder Fahrerlebnisses bereitzustellen, werden bei dem bekannten Verfahren die folgenden Schritte vorgeschlagen: Empfangen einer ersten Fahrbahnbeschaffenheitsinformation, wobei die erste Fahrbahnbeschaffenheitsinformation zumindest eine Information bezüglich einer Beschaffenheit eines mittels des Kraftfahrzeuges noch zu befahrenden ersten Fahrbahnabschnittes aufweist, und vorausschauendes Adaptieren zumindest einer Fahrwerkkomponente mittels der Fahrwerkregeleinheit, basierend auf der ersten Fahrbahnbeschaffenheitsinformation.

Es ist Ziel der Erfindung eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens gemäß dem Hauptanspruch, sowie mittels einer Vorrichtung gemäß einem nebengeordneten Anspruch.

Der Gegenstand des Hauptanspruches betrifft dabei ein Verfahren zur Modifikation Safety- und/oder Security-relevanter Steuergeräte in einem Kraftfahrzeug, das Verfahren aufweisend: Monitoren eines Safety- und/oder Security-relevanten Steuergerätes des Kraftfahrzeuges. Falls bei dem Monitoren des Steuergerätes ein kritisches Ereignis eintritt: Überführen des Steuergerätes in einen sicheren Zustand bezüglich des kritischen Ereignisses. Ermitteln, ob für das eingetretene kritische Ereignis eine Problemlösung mittels einer Parametermodifikation des Steuergerätes in einer entsprechenden Problemlösungsdatenbank vorhanden ist. Und falls die Problemlösung vorhanden ist: Bereitstellen eines entsprechenden Parameterdatensatzes aus der Problemlösungsdatenbank, wobei der Parameterdatensatz aufweist: Eine Steuergeräteinformation bezüglich eines zu modifizierenden Steuergerätes. Eine Parameterinformation bezüglich eines zu modifizierenden Parameters des zu modifizierenden Steuergerätes. Und dabei entspricht das zu modifizierende Steuergerät dem Steuergerät des Kraftfahrzeuges. Überprüfen, für jede in dem Parameterdatensatz enthaltenen Parameterinformation, ob die entsprechende Parameterinformation bezüglich des entsprechenden zu modifizierenden Parameters des zu modifizierenden Steuergerätes, für das Steuergerät des Kraftfahrzeuges gültig ist. Und falls die entsprechende Parameterinformation gültig ist: Modifizieren des entsprechenden Parameters des Steuergerätes des Kraftfahrzeuges, gemäß der entsprechenden Parameterinformation, und freigeben des Steuergerätes aus dem sicheren Zustand.

Die Verfahrensschritte können dabei automatisiert ausgeführt werden.

Safety-relevant im Sinne der Erfindung meint dabei relevant bezüglich gültiger Sicherheitsnormen, wie Beispielsweise der ISO26262 und darauf basierenden Normen.

Security-relevant im Sinne der Erfindung meint dabei hingegen relevant für den Zugriffschutz, Schutz vor Eindringlingen, Schutz vor Datenverfälschungen und/oder Datenmanipulationen, Manipulationen von Steuergeräten und dergleichen. Eine solche Datenmanipulation oder auch eine Manipulation eines Steuergerätes kann beispielsweise mittels eines Hacking-Angriffs von außerhalb des Kraftfahrzeuges mittels einer wireless Lösung erfolgen.

Ein kritisches Ereignis im Sinne der Erfindung kann dabei ein eintretendes Ereignis sein, welches Security- und/oder Safety-relevant in Bezug auf eine entsprechende Fahrsituation und/oder eine Fahrzeugfunktion beziehungsweise ein Steuergerät des Kraftfahrzeuges ist.

Ein sicherer Zustand bezüglich des kritischen Ereignisses im Sinne der Erfindung, kann dabei einen Zustand einer entsprechenden Fahrsituation und/oder einer Fahrzeugfunktion beziehungsweise eines Steuergerätes des Kraftfahrzeuges meinen, bei dem bezüglich der zu steuernden Safety-relevanten Funktion/System/Modul und damit etwaiger weiterer damit verbundener Safetyrelevanter Funktionen/Systeme/Module, von welchem/denen kein unvertretbares Risiko für Leib und Leben ausgehen kann.

Eine Parametermodifikation im Sinne der Erfindung, kann dabei insbesondere eine Änderung eines Wertes eines entsprechenden Parameters einer Fahrzeugfunktion beziehungsweise eines Steuergerätes des Kraftfahrzeuges meinen. Dabei kann vorzugsweise eine Default-Wert des entsprechenden Parameters temporär überschrieben werden. Das heißt, dass der Default-Wert nicht verloren geht, sondern zwischengespeichert wird, vorzugsweise in dem Steuergerät selbst. Jedoch ist auch ein Zwischenspeichern des Default-Wertes an einer anderen Stelle im Kraftfahrzeug möglich, beispielsweise in einem zentralen Controller in einer zentralen Default-Werte-Datenbank. Der modifizierte Parameter kann dabei beispielsweise nach einem bestimmten Zeitlimit wieder zurückgesetzt werden, somit also erneut mit dem Default-Wert überschrieben werden. Dabei kann der überschriebene Wert verloren gehen. Er kann jedoch auch zusätzlich weiterhin gespeichert vorgehalten werden.

Eine Problemlösungsdatenbank im Sinne der Erfindung, kann dabei eine Datenbank auf einem Server beziehungsweise in einem Backend meinen, auf dem ermittelte Lösungen für bekannte Probleme bei Kraftfahrzeugfunktionen beziehungsweise Steuergeräten von Kraftfahrzeugen bereitgestellt werden.

Eine Steuergeräteinformation im Sinne der Erfindung meint dabei eine Information, mit welcher auf ein bestimmtes Steuergerät zurückgeschlossen werden kann, wie beispielsweise eine Seriennummer, ein Herstellungsdatum, eine Firmwarenummer und dergleichen oder auch eine Kombination dieser Informationen.

Eine gültige Parameterinformation im Sinne der Erfindung meint dabei, dass die entsprechenden Parameterinformation für die entsprechende Kraftfahrzeugfunktion beziehungsweise das entsprechende Steuergerät ausgelegt ist.

Durch die erfindungsgemäße Lehre wird der Vorteil erreicht, dass im Falle eines Eintretens eines kritischen Ereignisses das Kraftfahrzeug selbständig nach einer entsprechenden Lösung für das eingetretene Ereignis beziehungsweise davon betroffenen Fahrzeugfunktionen beziehungsweise Steuergräten suchen kann und bei Erfolg eine entsprechende Lösung für das eingetretene Ereignis bereitstellen kann. Dies kann beispielsweise für einen Übergangszeitraum erfolgen, bis eine neu aufspielbare Software und/oder ein neu einsetzbares Steuergerät erhältlich ist oder auch beispielsweise zur Überbrückung eines Zeitraumes, bis zum nächsten Service-Termin in einer Werkstatt.

Der Gegenstand eines nebengeordneten Anspruches betrifft dabei eine Vorrichtung zur Modifikation Safety- und/oder Security-relevanter Steuergeräte in einem Kraftfahrzeug, die Vorrichtung aufweisend: Eine Monitoring-Vorrichtung, zum Monitoren eines Safety- und/oder Security-relevanten Steuergerätes des Kraftfahrzeuges bezüglich eines kritischen Ereignisses. Eine Überführungsvorrichtung, zum Überführen des Steuergerätes in einen sicheren Zustand bezüglich des kritischen Ereignisses. Und eine Modifikationsvorrichtung, zum Modifizieren eines entsprechenden Parameters des Steuergerätes des Kraftfahrzeuges. Und dabei ist die Vorrichtung dazu eingerichtet, irgendein erfindungsgemäßes Verfahren auszuführen.

Durch die erfindungsgemäße Lehre wird der Vorteil erreicht, dass eine Vorrichtung bereitgestellt werden kann, um im Falle eines Eintretens eines kritischen Ereignisses selbständig nach einer entsprechenden Lösung für das eingetretene Ereignis beziehungsweise davon betroffenen Fahrzeugfunktionen beziehungsweise Steuergräten suchen kann und bei Erfolg eine entsprechende Lösung für das eingetretene Ereignis für das Kraftfahrzeug bereitstellen kann.

Der Gegenstand eines weiteren nebengeordneten Anspruches betrifft dabei ein Kraftfahrzeug, wobei das Kraftfahrzeug irgendeine erfindungsgemäße Vorrichtung aufweist, welche dazu eingerichtet ist, irgendein erfindungsgemäßes Verfahren auszuführen.

Durch die erfindungsgemäße Lehre wird der Vorteil erreicht, dass ein Kraftfahrzeug bereitgestellt werden kann, welches dazu eingerichtet ist, auf ein Eintretens eines kritischen Ereignisses selbständig nach einer entsprechenden Lösung für das eingetretene Ereignis beziehungsweise davon betroffenen Fahrzeugfunktionen beziehungsweise Steuergräten zu suchen und bei Erfolg eine entsprechende Lösung für das eingetretene Ereignis bereitzustellen.

Der Gegenstand eines weiteren nebengeordneten Anspruches betrifft dabei ein Computerprogrammprodukt für eine erfindungsgemäße Vorrichtung, wobei die Vorrichtung nach irgendeinem erfindungsgemäßen Verfahren betreibbar ist.

Durch die erfindungsgemäße Lehre wird der Vorteil erreicht, dass das Verfahren besonders effizient automatisiert ausgeführt werden kann.

Der Gegenstand eines weiteren nebengeordneten Anspruches betrifft dabei einen Datenträger aufweisend ein erfindungsgemäßes Computerprogrammprodukt.

Durch die erfindungsgemäße Lehre wird der Vorteil erreicht, dass das Verfahren besonders effizient auf die das Verfahren ausführenden Vorrichtungen, Systeme und/oder Kraftfahrzeuge verteilt beziehungsweise vorgehalten werden kann.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mit umfasst, soweit der Kontext dies nicht explizit ausschließt. Etwaige Verfahrensschritte können, soweit der Kontext dies nicht explizit ausschließt, automatisiert ausgeführt werden.

Nachfolgend werden weitere exemplarische Ausgestaltungen des erfindungsgemäßen Verfahrens erläutert.

Entsprechend einer ersten exemplarischen Ausgestaltung weist das Verfahren ferner auf, dass das kritische Ereignis ein Safety- und/oder Security-relevantes kritisches Ereignis aufweist.

Diese Ausgestaltung weist den Vorteil auf, dass es ermöglicht werden kann, auf Safety- und/oder Security-relevante kritische Ereignis zu reagieren und falls bereits eine Lösung für solch ein Ereignis existiert, diese bereitzustellen, um eine sichere Weiterfahrt ermöglichen zu können.

Entsprechend einer weiteren exemplarischen Ausgestaltung weist das Verfahren ferner auf, dass die entsprechende Problemlösungsdatenbank Kraftfahrzeugintern vorhaltbar ist.

Diese Ausgestaltung weist den Vorteil auf, dass bekannte Problemlösungen von einem Backendserver zeitversetzt in die fahrzeuginterne Problemlösungsdatenbank übermittelt werden kann, so dass auch in einem Bereich, in welchem keine mobile Kommunikationsverbindung zu dem Backendserver etabliert werden kann, etwaig benötigte Problemlösungen auffindbar sein können. Das Verfahren arbeitet dabei in einem sogenannten Offline-Betrieb.

Entsprechend einer weiteren exemplarischen Ausgestaltung weist das Verfahren ferner auf, dass die entsprechende Problemlösungsdatenbank Kraftfahrzeugextern vorhaltbar ist.

Diese Ausgestaltung weist den Vorteil auf, dass für viele unterschiedliche Kraftfahrzeuge eine umfangreiche Problemlösungsdatenbank vorgehalten werden kann.

Entsprechend einer weiteren exemplarischen Ausgestaltung weist das Verfahren ferner auf, dass das Eintreten des kritischen Ereignisses von einem fahrzeugexternen Server beziehungsweise einer Cloud auslösbar ist.

Diese Ausgestaltung weist den Vorteil auf, dass auf ein bekanntes kritisches Ereignis beziehungsweise eine Problem einer Fahrzeugfunktion oder eines Steuergerätes, welches sich bei einem Kraftfahrzeug noch nicht bemerkbar gemacht hat, dennoch reagiert werden kann, indem Serverseitig eine Problemlösung in das betreffende Kraftfahrzeug aufgespielt werden kann. Insbesondere in Fällen, bei denen Herstellerintern aufgefallen ist, dass eine Fahrzeugfunktion beziehungsweise ein entsprechendes Steuergerät von extern kompromittiert wurde, kann dadurch eine schnelle Lösung bereitgestellt werden, bei der im Besten Fall der Fahrzeugnutzer hiervon gar keine Notiz nimmt.

Entsprechend einer weiteren exemplarischen Ausgestaltung weist das Verfahren ferner auf: Anfragen der Problemlösungsdatenbank, ob für das Steuergerät ein kritisches Ereignis vorliegt. Und falls ein kritisches Ereignis vorliegt: Abrufen des kritischen Ereignisses aus der Problemlösungsdatenbank. Dabei erfolgt das Anfragen der Problemlösungsdatenbank bei Beginn einer Nutzung des Kraftfahrzeuges und/oder in regelmäßigen Abständen.

Diese Ausgestaltung weist den Vorteil auf, dass vor beziehungsweise zu Fahrbeginn bereits potentielle Lösungen für dem Fahrzeug derzeit noch nicht bekannte, jedoch möglicherweise bevorstehende kritische Ereignisse, an das Kraftfahrzeug bereitgestellt werden können.

Entsprechend einer weiteren exemplarischen Ausgestaltung weist das Verfahren ferner auf, dass das Kraftfahrzeug ein hochautomatisiert betreibbares Kraftfahrzeug ist. Dabei ist das Steuergerät Safety- und/oder Security-relevant für einen hochautomatisierten Betrieb des Kraftfahrzeuges. Dabei weist das kritische Ereignis ein für den hochautomatisierten Betrieb des Kraftfahrzeuges kritisches Ereignis auf. Und der sichere Zustand weist dabei einen sicheren Zustand bezüglich des hochautomatisierten Betrieb des Kraftfahrzeuges auf.

Ein hochautomatisierter Betrieb des Kraftfahrzeuges im Sinne der Erfindung meint dabei, dass das Kraftfahrzeug mittels Assistenzsystemen derart automatisiert betreibbar ist, dass der Fahrer des Kraftfahrzeuges zwar während des hochautomatisierten Fahrbetriebes das Kraftfahrzeug nicht selbst steuert, jedoch während der hochautomatisierten Fahrt weiterhin die Kontrolle und auch die Verantwortung für diese Fahrt hat. Ein Beispiel einer solchen hochautomatisierten Fahrt, sind Fahrerassistenzsysteme, welche in einem Verkehrsstau beziehungsweise einer sogenannten Stop-and-Go Fahrt auf einer Autobahn das Kraftfahrzeug selbständig führen, ohne dass der Fahrer selbst ständig abbremsen und beschleunigen muss.

Prinzipiell kann das Verfahren jedoch auch in einem autonomen Fahrbetrieb Anwendung finden.

Ferner kann das Verfahren auch in einem herkömmlichen Fahrerassistenzbetrieb eingesetzt werden.

Diese Ausgestaltung weist den Vorteil auf, dass eine hochautomatisierte Fahrt eines Kraftfahrzeuges noch sicherer gemacht werden kann, indem entsprechende auftretende kritische Probleme für das hochautomatisierte Fahren automatisch zu lösen versucht werden.

Entsprechend einer ersten exemplarischen Ausgestaltung weist die Vorrichtung ferner eine

Kommunikationsvorrichtung auf, zur Kommunikation mit einem fahrzeugexternen Server. Dabei weist der fahrzeugexterne Server eine Problemlösungsdatenbank auf.

Eine Kommunikationsvorrichtung im Sinne der Erfindung meint dabei eine Mobilfunkkommunikationsvorrichtung zur Kommunikation in einem zellularen Mobilfunknetzwerk. Dabei kann eine im Kraftfahrzeug verbaute Kommunikationsvorrichtung verwendet werden, mit einer Fahrzeuginternen SIM-Karte. Es kann jedoch auch ein Mobilfunkkommunikationsgerät eines Nutzers des Kraftfahrzeuges verwendet werden, welches mit dem Kraftfahrzeug kabelgebunden oder auch drahtlos, beispielsweise über eine Bluetooth-Verbindung oder dergleichen, in Verbindung steht und von dem Kraftfahrzeug entsprechend genutzt werden kann.

Diese Ausgestaltung weist den Vorteil auf, dass für das Kraftfahrzeug eine weitverbreitete

Kommunikationsmöglichkeit bereit gestellt werden kann, um eine Verbindung zu einer Problemlösungsdatenbank auf einem Backendserver beziehungsweise einer Cloud aufzunehmen.

Die Erfindung erlaubt es somit, spezifische auf das Fahrzeug, also inklusive der entsprechenden verbauten Teile, den Fahrer und die konkrete Fahrsituation zugeschnittene Funktions-Parametrisierungen im Backend zu generieren und in das Fahrzeug zu laden, die außerdem zusätzliches Wissen aus dem Backend, wie beispielsweise Wetter, Verkehr, bekannte Fehler, sich ändernde rechtliche Rahmenbedingungen, sich ändernde Bedingungen in anderen angrenzenden Ländern und dergleichen berücksichtigen können.

Für die Funktionen sind Default-Parametrisierungen im Fahrzeug hinterlegt, die gegebenenfalls nur eine eingeschränkte Funktionalität ermöglicht. In einem extrem Fall kann dies bedeuten, dass eine Funktion deaktiviert ist, bis ein entsprechender Parameterdatensatz als Problemlösung verfügbar ist.

Beispiele für Use-Cases:
Prüfung von Hardware-Nummern und Software-Versionen entsprechender Steuergeräte im Backend, also auf dem fahrzeugexternen Server, beispielsweise auf bekannte Problemteile. Und falls entsprechende relevante Fahrzeug-Eigenschaften identifiziert sind, die als kritische Ereignisse aufgefasst werden können, dann suchen und bereitstellen eines entsprechendem Parameterdatensatzes, welcher beispielsweise entsprechende Funktionsparametrisierungen oder Funktionseinschränkungen beziehungsweise keine vollständige Funktionsaktivierungsfreigabe des entsprechenden Steuergerätes als Parameterinformation aufweisen kann.

Beispiel 1: Ein bestimmtes Bauteil, hier ein Fensterheber, mit einer bestimmten Seriennummer, einem bestimmtem Alter, in bestimmten Ländern und dergleichen ist nicht so belastbar wie angenommen: Es folgt sodann eine Parametrisierung der maximalen Fensterheber-Kraft/- Geschwindigkeit mittels einer entsprechenden Parameterinformation, um entsprechende Bauteile in genau diesen Fahrzeugen zu schonen. Dies kann beispielsweise permanent oder auch temporär als eine Art Übergangslösung eingesetzt werden, mit damit möglicherweise verbundenen Funktions- oder Komforteinschränkungen, bis ein überarbeitetes Bauteil verfügbar ist.

Beispiel 2: Zur Überbrückung der Zeit von Fehleranalyse, also Ursache oder Lösung noch unklar und in Arbeit, bis erfolgter Umsetzung einer technischen Maßnahme im Feld: Es folgt sodann eine schnell ausrollbare Parametrisierung, wie beispielsweise eine Funktionsdegradation um Fehler und/oder kritische Safetyrelevante beziehungsweise Security-relevante Szenarien zu vermeiden, ein Workaround um Fehler zu vermeiden beziehungsweise zu beheben oder auch eine Funktionsdeaktivierung genau der betroffenen Steuergeräte in den betroffenen Fahrzeugen. Dadurch kann beispielsweise verhindert werden, dass ein aufwändiges generelles Software-Update aller betroffenen Fahrzeuge notwendig wird. Es kann jedoch auch beispielsweise die Zeit bis zur Verfügbarkeit des Software-Updates überbrückt werden, so dass in dieser Zeit beispielsweise kein Safety-relevantes beziehungsweise Security-relevantes Risiko weiter besteht. Dabei kann der Fahrzeugnutzer über die erfolgten Einschränkungen beziehungsweise Änderungen beispielsweise mittels einer geeigneten Nachricht informiert werden, beispielsweise mittels eines verbauten sogenannten Human-Machine-Interface (HMI) des Kraftfahrzeuges.

Beispiel 3: Bei Markteinführung eines Kraftfahrzeuges ist eine neue Funktion vorhanden, wobei diese Funktion als noch nicht serienreif gekennzeichnet ist:
Es folgt eine Deaktivierung der Funktion als im Backend hinterlegte Parameterinformation, solange bis ein kleiner delta-patch verfügbar und eingespielt ist. Dadurch ergeben sich Vorteil durch eine Reduktion eines Updateumfangs, Reduktion von Kosten und Zeit. Somit können also bereits Funktionen beziehungsweise Steuergeräte in einem Kraftfahrzeug mit verbaut werden, welche zum Produktionszeitpunkt noch nicht serienreif sind, ohne Fehlfunktionen dieser Steuergeräte befürchten zu müssen.

Somit können Teilumfänge, also feingranular, von Funktionen beziehungsweise Steuergeräten über das Backend freigeschaltet werden, sobald diese Teilumfänge stabil beziehungsweise fehlerfreiarbeiten.

Ferner kann dies auch sinnvoll sein, um Gesetze beziehungsweise sich ändernde Rahmenbedingungen bestimmter Länder, zu berücksichtigen. Beispielsweise kann eine Pflicht oder auch ein Verbot mancher Funktionen in manchen Ländern bestehen. Ein Beispiel dafür kann eine Pflicht oder auch ein Verbot zur Benutzung eines Abblendlichtes beziehungsweise Tagfahrlichtes am hellen Tag sein. Mittels einer Geopositionslokalisierung des Kraftfahrzeuges kann diesem bei einer Grenzüberfahrt ein entsprechender Parameterdatensatz übermittelt werden, um die entsprechenden gesetzlichen Bestimmungen des neuen Landes einzuhalten.

Ferner können komfortspezifische und kundenspezifische Anpassungen der Steuergräte ermöglicht werden. Beispielsweise kann eine Berechnung optimaler Parametrisierungen im Backend erfolgen, beispielsweise angepasst an eine Nutzung beziehungsweise Fahrweise des Fahrzeugnutzers mit dem Kraftfahrzeug, welche dann mittels einer eines entsprechenden Parameterdatensatzes bereitgestellt werden können.

Die Erfindung wird nachfolgend eingehender an Hand der Figuren erläutert werden. In diesen zeigen:
Fig. 1 eine schematische Darstellung eines vorgeschlagenen Verfahrens gemäß einer beispielhaften Ausgestaltung der Erfindung;
Fig. 2 eine schematische Darstellung eines vorgeschlagenen Verfahrens gemäß einer weiteren beispielhaften Ausgestaltung der Erfindung; und
Fig. 3 eine schematische Darstellung einer vorgeschlagenen Vorrichtung gemäß einer weiteren beispielhaften Ausgestaltung der Erfindung.

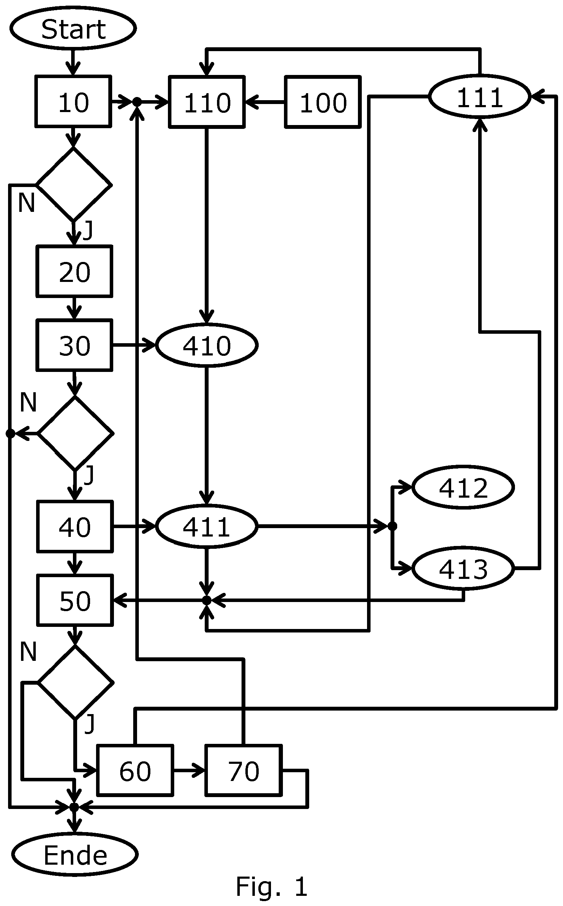

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Verfahrens zur Modifikation Safety- und/oder Security-relevanter Steuergeräte 110 in einem Kraftfahrzeug 100. Das Verfahren weist dabei auf: Monitoren 10 eines Safety- und/oder Security-relevanten Steuergerätes 110 des Kraftfahrzeuges 100. Falls bei dem Monitoren 10 des Steuergerätes 110 ein kritisches Ereignis eintritt: Überführen 20 des Steuergerätes 110 in einen sicheren Zustand bezüglich des kritischen Ereignisses. Ermitteln 30, ob für das eingetretene kritische Ereignis eine Problemlösung mittels einer Parametermodifikation des Steuergerätes 110 in einer entsprechenden Problemlösungsdatenbank 410 vorhanden ist. Und falls die Problemlösung vorhanden ist: Bereitstellen 40 eines entsprechenden Parameterdatensatzes 411 aus der Problemlösungsdatenbank 410. Dabei weist der Parameterdatensatz 411 eine Steuergeräteinformation 412 bezüglich eines zu modifizierenden Steuergerätes, und eine Parameterinformation 413 bezüglich eines zu modifizierenden Parameters 111 des zu modifizierenden Steuergerätes auf. Und dabei entspricht das zu modifizierende Steuergerät dem Steuergerät 110 des Kraftfahrzeuges 100. Ferner weist das Verfahren, für den Fall, dass die Problemlösung vorhanden ist auf: Überprüfen 50, für jede in dem Parameterdatensatz 411 enthaltenen Parameterinformation 413, ob die entsprechende Parameterinformation 413 bezüglich des entsprechenden zu modifizierenden Parameters 111 des zu modifizierenden Steuergerätes, für das Steuergerät 110 des Kraftfahrzeuges 100 gültig ist. Und falls die entsprechende Parameterinformation 413 gültig ist, weist das Verfahren ferner auf: Modifizieren 60 des entsprechenden Parameters 111 des Steuergerätes 110 des Kraftfahrzeuges 100, gemäß der entsprechenden Parameterinformation 413 und freigeben 70 des Steuergerätes 110 aus dem sicheren Zustand.

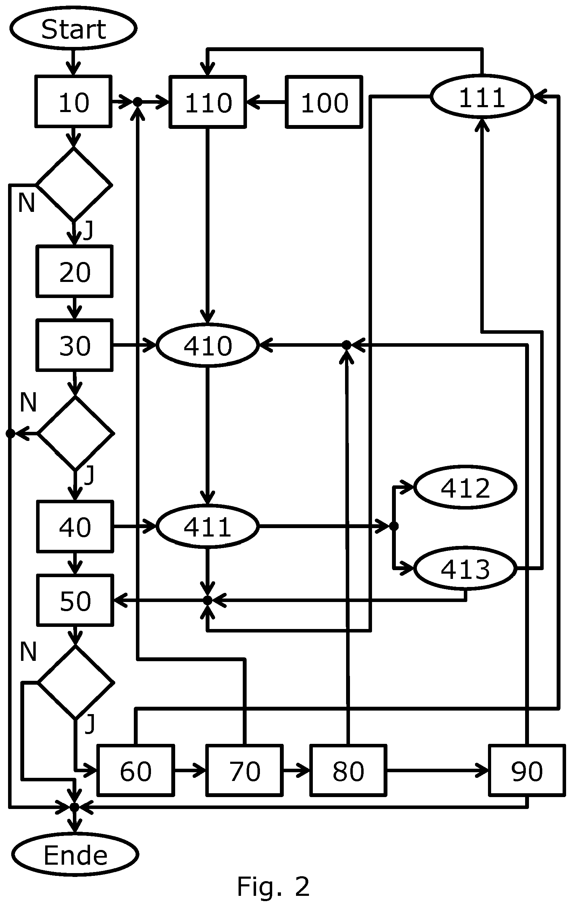

Fig. 2 zeigt eine schematische Darstellung eines vorgeschlagenen Verfahrens gemäß einer weiteren beispielhaften Ausgestaltung der Erfindung.

Dabei zeigt Fig. 2 eine schematische Darstellung eines bezüglich der Fig. 1 weiterentwickelten Verfahrens. Das zuvor für Fig. 1 gesagte, gilt daher auch für Fig. 2 fort.

Fig. 2 zeigt das Verfahren aus Fig. 1 bei dem ferner das Verfahren aufweist: Anfragen 80 der Problemlösungsdatenbank 410, ob für das Steuergerät 110 ein kritisches Ereignis vorliegt und falls ein kritisches Ereignis vorliegt: Abrufen 90 des kritischen Ereignisses aus der Problemlösungsdatenbank 410. Und dabei erfolgt das Anfragen 80 der Problemlösungsdatenbank 410 bei Beginn einer Nutzung des Kraftfahrzeuges 100 und/oder in regelmäßigen Abständen.

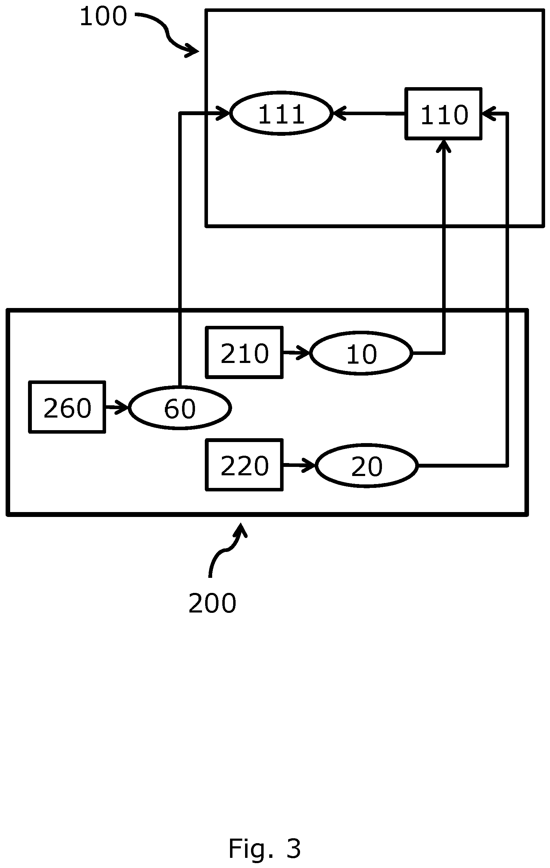

Fig. 3 zeigt eine schematische Darstellung einer vorgeschlagenen Vorrichtung gemäß einer weiteren beispielhaften Ausgestaltung der Erfindung.

Dabei zeigt Fig. 3 eine schematische Darstellung einer vorgeschlagenen Vorrichtung zur Modifikation Safety- und/oder Security-relevanter Steuergeräte 110 in einem Kraftfahrzeug 100. Dabei weist die Vorrichtung 200 auf: Eine Monitoring-Vorrichtung 210, zum Monitoren 10 eines Safety- und/oder Security-relevanten Steuergerätes 110 des Kraftfahrzeuges 100 bezüglich eines kritischen Ereignisses. Eine Überführungsvorrichtung 220, zum Überführen 20 des Steuergerätes 110 in einen sicheren Zustand bezüglich des kritischen Ereignisses. Und eine Modifikationsvorrichtung 260, zum Modifizieren 60 eines entsprechenden Parameters 111 des Steuergerätes 110 des Kraftfahrzeuges 100. Und dabei ist die Vorrichtung 200 dazu eingerichtet, irgendein erfindungsgemäßes Verfahren auszuführen.

Die Erfindungsidee kann wie folgt zusammengefasst werden. Es werden ein Verfahren, eine diesbezügliche Vorrichtung und ein Kraftfahrzeug bereitgestellt, wodurch es möglich werden kann, dass für bestimmte Funktionen beziehungsweise Steuergeräte im Fahrzeug, die für diese Funktionen vorhandenen Parametersätze durch eine vom Fahrzeug beziehungsweise den zugehörigen Funktionen initiierte Abfrage an ein Backend beziehungsweise einen Server verändert werden können. Insbesondere kann dies auch temporär geschehen.

Im Fahrzeug werden die darin hinterlegten Parameter für Funktionen beziehungsweise Steuergeräte dabei sozusagen wie Default-Werte der Parametersätze für die entsprechenden Funktionen beziehungsweise Steuergeräte betrachtet. Diese Parametersätze können mit der vorgeschlagenen Erfindung im Bedarfsfall geändert werden, indem eine entsprechende Problemlösung aus einer Problemdatenbank angefordert beziehungsweise übermittelt wird, die eine entsprechende Parameterinformation als Workaround des entsprechenden Default-Parameterwertes des entsprechenden Parameters des entsprechenden Steuergerätes aufweist. Die Wirksamkeit des entsprechenden Parameters beziehungsweise Parametersatzes bezüglich der Problemlösung des kritischen Ereignisses kann dabei gegebenenfalls im Vorfeld abgesichert beziehungsweise zertifiziert sein.

Unter bestimmten Umständen, wie beispielsweise alle x Minuten/Stunden/Tage, bei jedem Fahrzeugstart, bei jeder x-ten Funktionsaktivierung, jede x Kilometer, in Abhängigkeit der Position des Kraftfahrzeuges, im Falle eines Eintretens eines kritischen Ereignisses, Fahrerabhängig oder auch auf Wunsch eines Fahrzeugnutzers und dergleichen, wird eine Verbindung zu einer Problemdatenbank aufgebaut und dort noch Problemlösungen gesucht. Dies kann bezüglich eines bekannten kritischen Ereignisses erfolgen, um nach einer entsprechenden Lösung eines bekannten beziehungsweise aufgetretenen Problems zu suchen.

Das heißt, Das Kraftfahrzeug beziehungsweise eine entsprechende Vorrichtung des Kraftfahrzeuges baut von sich aus eine Online-Verbindung zum Backend auf, holt sich aus dem Backend eine im Backend ermittelte/berechnete optimale Parametrisierung als Parameterinformation und überschreibt mit diesen optimalen Parameterwerten die Default-Werte. Das Überschreiben kann dabei insbesondere temporär erfolgen, so dass die Default-Werte nicht verloren gehen.

Die temporären Werte sind dabei nur für einen gewissen Zeitraum gültig, so dass nach Ablauf der Gültigkeitsdauer die Funktion nicht mehr mit den temporären Werten aus dem Backend sondern erneut mit den Default-Werten parametrisiert wird. Die Default-Werte können dabei auch bewirken, dass die Funktion grundsätzlich nur eingeschränkt betrieben werden kann und erst beziehungsweise lediglich durch temporär gültige Parametersätze, welche beispielsweise aus dem Backend zu beziehen sein können, vollumfänglich genutzt werden kann.

Dabei kann es möglich sein, dass diese Parametersätze lediglich temporär wirken und somit stets aktualisiert werden müssen, um den vollen Funktionsumfang weiter nutzen zu können.

Eine derart ausgelegte Funktion beziehungsweise ein derart ausgelegtes Steuergerät, wie beispielsweise die Fahrerassistenzfunktion "automatisches Tagfahrlicht" würde also unter bestimmten Umständen beziehungsweise Auslösebedingungen im Backend nach einer geeigneten Parametrisierung nachfragen. Solch eine Parametrisierung im Beispiel des automatisierten Tagfahrlichtes könnte dabei sein, dass in einem Land, in welchem das Tagfahrlicht bei Personenkraftwagen gesetzlich verboten ist, die Parameterinformation für die entsprechende Fahrerassistenzfunktion beziehungsweise für das entsprechende Steuergerät, den Wert "0", also "Aus" aufweist. Dahingegen kann der Default-Wert eine "1" also "An" aufweisen, für den Fall, dass diese FahrerassistenzFunktion aktiviert ist.

Besonders schwierig ist dabei der Zeitraum vom bekanntwerden des Fehlersymptoms, wie beispielsweise einer Funktionsstörung, über eine Analyse der Fehlerursache, Entwicklung der Fehlerbehebung, beispielsweise Entwicklung und Test des Software-Updates, bis zur Bereitstellung der Fehlerlösung an die weltweiten Händler, Werkstätten und dergleichen. Dieser Zeitraum der Fehleranalyse und Entwicklung einer Fehlerlösung kann unter Umständen viele Wochen betragen. Die Erfindung zielt unter anderem auch darauf ab, genau auch in diesem Fehleranalyse-Zeitraum eine Auswirkung von Fehlern beziehungsweise Problemen, insbesondere Safety- und/oder Security-relevanten Problemen zu adressieren, ohne ein geeignetes Software-Update zu haben. Hierbei werden möglicherweise Funktionsdegradierungen in Kauf genommen. Umgekehrt kann die Erfindung dazu eingesetzt werden, kontinuierlich zu prüfen, ob eine Funktion noch als sicher gilt, und eine Aktivierung der Funktion oder Funktionsausprägungen nur dann zuzulassen, wenn sie, beispielsweise im Backend, weiterhin als sicher gilt.

### Bezugszeichenliste

- 10: Monitoren eines Safety- und/oder Security-relevanten Steuergerätes
- 20: Überführen des Steuergerätes in einen sicheren Zustand
- 30: ermitteln, ob für das eingetretene kritische Ereignis eine Problemlösung in einer entsprechenden Problemlösungsdatenbank vorhanden ist
- 40: Bereitstellen eines entsprechenden Parameterdatensatzes
- 50: überprüfen, ob die entsprechende Parameterinformation für das Steuergerät gültig ist
- 60: Modifizieren des entsprechenden Parameters des Steuergerätes
- 70: freigeben des Steuergerätes aus dem sicheren Zustand
- 80: Anfragen der Problemlösungsdatenbank, ob für das Steuergerät ein kritisches Ereignis vorliegt
- 90: Abrufen des kritischen Ereignisses aus der Problemlösungsdatenbank
- 100: Kraftfahrzeug
- 110: Safety- und/oder Security-relevantes Steuergerät
- 111: zu modifizierender Parameter des Steuergerätes
- 200: Vorrichtung
- 210: Monitoring-Vorrichtung
- 220: Überführungsvorrichtung
- 230: Kommunikationsvorrichtung
- 260: Modifikationsvorrichtung
- 400: Server
- 410: Problemlösungsdatenbank
- 411: Parameterdatensatz
- 412: Steuergeräteinformation
- 413: Parameterinformation

## Patentansprüche

1. Ein Verfahren zur Modifikation Safety- und/oder Security-relevanter Steuergeräte (110) in einem Kraftfahrzeug (100), das Verfahren aufweisend:
- Monitoren (10) eines Safety- und/oder Security-relevanten Steuergerätes (110) des Kraftfahrzeuges (100),
- falls bei dem Monitoren (10) des Steuergerätes (110) ein kritisches Ereignis eintritt:
- Überführen (20) des Steuergerätes (110) in einen sicheren Zustand bezüglich des kritischen Ereignisses,
- ermitteln (30), ob für das eingetretene kritische Ereignis eine Problemlösung mittels einer Parametermodifikation des Steuergerätes (110) in einer entsprechenden Problemlösungsdatenbank (410) vorhanden ist, und
- falls die Problemlösung vorhanden ist:
- Bereitstellen (40) eines entsprechenden Parameterdatensatzes (411) aus der Problemlösungsdatenbank (410), wobei der Parameterdatensatz (411) aufweist:
- eine Steuergeräteinformation (412) bezüglich eines zu modifizierenden Steuergerätes, und
- eine Parameterinformation (413) bezüglich eines zu modifizierenden Parameters (111) des zu modifizierenden Steuergerätes, und wobei das zu modifizierende Steuergerät dem Steuergerät (110) des Kraftfahrzeuges (100) entspricht,
- überprüfen (50), für jede in dem Parameterdatensatz (411) enthaltenen Parameterinformation (413), ob die entsprechende Parameterinformation (413) bezüglich des entsprechenden zu modifizierenden Parameters (111) des zu modifizierenden Steuergerätes, für das Steuergerät (110) des Kraftfahrzeuges (100) gültig ist, und
- falls die entsprechende Parameterinformation (413) gültig ist:
- Modifizieren (60) des entsprechenden Parameters (111) des Steuergerätes (110) des Kraftfahrzeuges (100), gemäß der entsprechenden Parameterinformation (413), und
- freigeben (70) des Steuergerätes (110) aus dem sicheren Zustand.

2. Das Verfahren gemäß Anspruch 1, wobei das kritische Ereignis ein Safety- und/oder Security-relevantes kritisches Ereignis aufweist.

3. Das Verfahren gemäß irgendeinem der vorhergehenden Ansprüche, wobei
die entsprechende Problemlösungsdatenbank (410) Kraftfahrzeugintern vorhaltbar ist.

4. Das Verfahren gemäß irgendeinem der vorhergehenden Ansprüche, wobei
die entsprechende Problemlösungsdatenbank (410) Kraftfahrzeugextern vorhaltbar ist.

5. Das Verfahren gemäß irgendeinem der vorhergehenden Ansprüche, wobei
das Eintreten des kritischen Ereignisses von einem fahrzeugexternen Server (400) beziehungsweise einer Cloud auslösbar ist.

6. Das Verfahren gemäß irgendeinem der vorhergehenden Ansprüche, das Verfahren ferner aufweisend:
- Anfragen (80) der Problemlösungsdatenbank (410), ob für das Steuergerät (110) ein kritisches Ereignis vorliegt, und
falls ein kritisches Ereignis vorliegt:
- Abrufen (90) des kritischen Ereignisses aus der Problemlösungsdatenbank (410), wobei
das Anfragen (80) der Problemlösungsdatenbank (410) bei Beginn einer Nutzung des Kraftfahrzeuges (100) und/oder in regelmäßigen Abständen erfolgt.

7. Das Verfahren gemäß irgendeinem der vorhergehenden Ansprüche, wobei
das Kraftfahrzeug (100) ein hochautomatisiert betreibbares Kraftfahrzeug ist,
das Steuergerät (110) Safety- und/oder Security-relevant für einen hochautomatisierten Betrieb des Kraftfahrzeuges (100) ist,
das kritische Ereignis ein, für den hochautomatisierten Betrieb des Kraftfahrzeuges (100), kritisches Ereignis aufweist, und
der sichere Zustand einen sicheren Zustand bezüglich des hochautomatisierten Betrieb des Kraftfahrzeuges (100) aufweist.

8. Eine Vorrichtung (200) zur Modifikation Safety- und/oder Security-relevanter Steuergeräte (110) in einem Kraftfahrzeug (100), die Vorrichtung (200) aufweisend:
- Eine Monitoring-Vorrichtung (210), zum Monitoren (10) eines Safety- und/oder Security-relevanten Steuergerätes (110) des Kraftfahrzeuges (100) bezüglich eines kritischen Ereignisses,
- eine Überführungsvorrichtung (220), zum Überführen (20) des Steuergerätes (110) in einen sicheren Zustand bezüglich des kritischen Ereignisses, und
- eine Modifikationsvorrichtung (260), zum Modifizieren (60) eines entsprechenden Parameters (111) des Steuergerätes (110) des Kraftfahrzeuges (100),
und wobei die Vorrichtung (200) dazu eingerichtet ist, die Schritte des Verfahrens gemäß irgendeinem der vorhergehenden Ansprüche auszuführen.

9. Die Vorrichtung (200) gemäß Anspruch 8, die Vorrichtung (200) ferner aufweisend:
- Eine Kommunikationsvorrichtung (230), zur Kommunikation mit einem fahrzeugexternen Server (400), wobei der fahrzeugexterne Server (400) eine Problemlösungsdatenbank (410) aufweist.

10. Ein Kraftfahrzeug (100), aufweisend eine Vorrichtung (200) gemäß Anspruch 8 oder 9.

11. Ein Computerprogrammprodukt für eine Vorrichtung (200) gemäß Anspruch 8 oder 9, welche nach einem Verfahren gemäß irgendeinem der Ansprüche 1 bis 7 betreibbar ist.

12. Ein Datenträger, aufweisend ein Computerprogrammprodukt gemäß Anspruch 11.

## Claims

1. Method for modifying safety- and/or security-relevant control devices (110) in a motor vehicle (100), said method comprising:
- monitoring (10) a safety- and/or security-relevant control device (110) of the motor vehicle (100),
- if a critical event occurs during monitoring (10) of the control device (110):
- transferring (20) the control device (110) into a safe state with regard to the critical event,
- identifying (30) whether a problem solution is available for the critical event that has occurred by means of a parameter modification of the control device (110) in a corresponding problem solution database (410), and
- if the problem solution is available:
- providing (40) a corresponding parameter data set (411) from the problem solution database (410), wherein the parameter data set (411) comprises:
- control device information (412) relating to a control device to be modified, and
- parameter information (413) relating to a parameter (111) to be modified of the control device to be modified, and wherein the control device to be modified corresponds to the control device (110) of the motor vehicle (100),
- checking (50) for each parameter information item (413) contained in the parameter data set (411) whether the corresponding parameter information item (413) relating to the corresponding parameter (111) to be modified of the control device to be modified is valid for the control device (110) of the motor vehicle (100), and
- if the corresponding parameter information item (413) is valid:
- modifying (60) the corresponding parameter (111) of the control device (110) of the motor vehicle (100) in accordance with the corresponding parameter information item (413), and
- releasing (70) the control device (110) from the safe state.

2. Method according to Claim 1, wherein
the critical event comprises a safety- and/or security-relevant critical event.

3. Method according to any one of the preceding claims, wherein
the corresponding problem solution database (410) can be stored internally to the motor vehicle.

4. Method according to any one of the preceding claims, wherein
the corresponding problem solution database (410) can be stored externally to the motor vehicle.

5. Method according to any one of the preceding claims, wherein
the occurrence of the critical event can be triggered from a vehicle-external server (400) and/or a cloud.

6. Method according to any one of the preceding claims, said method further comprising:
- querying (80) the problem solution database (410) to determine whether a critical event has occurred for the control device (110), and
if a critical event has occurred:
- retrieving (90) the critical event from the problem solution database (410), wherein
the problem solution database (410) is queried (80) when starting to use the motor vehicle (100) and/or at regular intervals.

7. Method according to any one of the preceding claims, wherein
the motor vehicle (100) is a motor vehicle that can be operated in a highly automated way,
the control device (110) is safety- and/or security-relevant for highly automated operation of the motor vehicle (100),
the critical event comprises a critical event for the highly automated operation of the motor vehicle (100),
and
the safe state comprises a safe state with regard to the highly automated operation of the motor vehicle (100).

8. Apparatus (200) for modifying safety- and/or security-relevant control devices (110) in a motor vehicle (100), said apparatus (200) comprising:
- a monitoring device (210) for monitoring (10) a safety- and/or security-relevant control device (110) of the motor vehicle (100) with regard to a critical event,
- a transfer device (220) for transferring (20) the control device (110) into a safe state with regard to the critical event, and
- a modification device (260) for modifying (60) a corresponding parameter (111) of the control device (110) of the motor vehicle (100),
and wherein
the apparatus (200) is configured to execute the steps of the method according to any one of the preceding claims.

9. Apparatus (200) according to Claim 8, the apparatus (200) further comprising:
- a communication device (230) for communication with a vehicle-external server (400), wherein the vehicle-external server (400) comprises a problem solution database (410).

10. Motor vehicle (100), having an apparatus (200) according to Claim 8 or 9.

11. Computer program product for an apparatus (200) according to Claim 8 or 9, which can be operated according to a method according to any one of Claims 1 to 7.

12. Data carrier, comprising a computer program product according to Claim 11.

## Revendications

1. Procédé permettant de modifier des appareils de commande importants pour la sûreté et/ou la sécurité (110) dans un véhicule automobile (100), le procédé présentant les étapes consistant à :
- surveiller (10) un appareil de commande important pour la sûreté et/ou la sécurité (110) du véhicule automobile (100),
- si un événement critique apparaît lors de la surveillance (10) de l'appareil de commande (110) :
- transférer (20) l'appareil de commande (110) à un état sûr par rapport à l'événement critique,
- déterminer (30) si pour l'événement critique apparu il existe une solution au moyen d'une modification de paramètre de l'appareil de commande (110) dans une base de données de solutions (410) correspondante, et
- si la solution existe :
- fournir (40) un enregistrement de paramètres (411) correspondant à partir de la base de données de solutions (410), l'enregistrement de paramètres (411) présentant :
- une information d'appareil de commande (412) concernant un appareil de commande à modifier, et
- une information de paramètre (413) concernant un paramètre (111) à modifier de l'appareil de commande à modifier, et dans lequel
l'appareil de commande à modifier correspond à l'appareil de commande (110) du véhicule automobile (100),
- vérifier (50), pour chaque information de paramètre (413) contenue dans l'enregistrement de paramètres (411), si l'information de paramètre (413) correspondante concernant le paramètre (111) correspondant à modifier de l'appareil de commande à modifier est valable pour l'appareil de commande (110) du véhicule automobile (100), et
- si l'information de paramètre (413) correspondante est valable :
- modifier (60) le paramètre (111) correspondant de l'appareil de commande (110) du véhicule automobile (100) selon l'information de paramètre (413) correspondante, et
- libérer (70) l'appareil de commande (110) de l'état sûr.

2. Procédé selon la revendication 1, dans lequel l'événement critique est un événement critique important pour la sûreté et/ou la sécurité.

3. Procédé selon l'une quelconque des revendications précédentes, dans lequel la base de données de solutions (410) correspondante peut être mise à disposition à l'intérieur du véhicule automobile.

4. Procédé selon l'une quelconque des revendications précédentes, dans lequel la base de données de solutions (410) correspondante peut être mise à disposition à l'extérieur du véhicule automobile.

5. Procédé selon l'une quelconque des revendications précédentes, dans lequel l'apparition de l'événement critique peut être déclenchée par un serveur externe au véhicule (400) ou à partir d'un cloud.

6. Procédé selon l'une quelconque des revendications précédentes, le procédé présentant en outre les étapes consistant à :
- interroger (80) la base de données de solutions (410) pour savoir s'il existe un événement critique pour l'appareil de commande (110), et
si un événement critique existe :
- extraire (90) l'événement critique de la base de données de solutions (410), dans lequel l'interrogation (80) de la base de données de
solutions (410) est effectuée au début de l'utilisation du véhicule automobile (100) et/ou à intervalles réguliers.

7. Procédé selon l'une quelconque des revendications précédentes, dans lequel
le véhicule automobile (100) est un véhicule automobile pouvant fonctionner de manière hautement automatisée,
l'appareil de commande (110) est important pour la sûreté et/ou la sécurité pour un fonctionnement hautement automatisé du véhicule automobile (100),
l'événement critique présente un événement critique pour le fonctionnement hautement automatisé du véhicule automobile (100), et
l'état sûr présente un état sûr concernant le fonctionnement hautement automatisé du véhicule automobile (100).

8. Dispositif (200) permettant de modifier des appareils de commande (110) importants pour la sûreté et/ou la sécurité dans un véhicule automobile (100), le dispositif (200) présentant :
- un dispositif de surveillance (210) pour surveiller (10) un appareil de commande (110) important pour la sûreté et/ou la sécurité du véhicule automobile (100) concernant un événement critique,
- un dispositif de transfert (220) pour transférer (20) l'appareil de commande (110) dans un état sûr par rapport à l'événement critique, et
- un dispositif de modification (260) pour modifier (60) un paramètre (111) correspondant de l'appareil de commande (110) du véhicule automobile (100),
et le dispositif (200) étant aménagé pour effectuer les étapes du procédé selon l'une quelconque des revendications précédentes.

9. Dispositif (200) selon la revendication 8, le dispositif (200) présentant en outre :
- un dispositif de communication (230) pour la communication avec un serveur externe au véhicule (400), le serveur externe au véhicule (400) présentant une base de données de solutions (410).

10. Véhicule automobile (100), présentant un dispositif (200) selon la revendication 8 ou 9.

11. Produit programme informatique pour un dispositif (200) selon la revendication 8 ou 9 qui peut fonctionner selon un procédé selon l'une quelconque des revendications 1 à 7.

12. Support de données, présentant un produit programme informatique selon la revendication 11.
